# EUROPÄISCHE PATENTSCHRIFT

(11) **EP 1 102 167 B1**
(45) Veröffentlichungstag und Bekanntmachung des Hinweises auf die Patenterteilung: **29.09.2004**
(21) Anmeldenummer: 99811064.7
(22) Anmeldetag: 18.11.1999
(51) Int. Cl.: G06F 9/445

(54) **Einrichtung und Betrieb einer Kommunikationsverbindung mit einem Steuergerät**
Setting up and operating a communication means to a control unit
Mise en place et opération d'une connection avec une unité de commande

(43) Veröffentlichungstag der Anmeldung: 23.05.2001
(73) Patentinhaber: ABB RESEARCH LTD., 8050 Zürich (CH)
(72) Erfinder: Werner, Thomas, 5404 Dättwil (CH); Greiner, Markus, 5000 Aarau (CH)
(74) Vertreter: ABB Patent Attorneys

(56) Entgegenhaltungen:
- WO-A-98/50861
- JP-A- 10 301 884
- JP-A- 11 296 375

## Beschreibung

### Technisches Gebiet

Die Erfindung bezieht sich auf das Gebiet der Leittechnik. Sie bezieht sich auf ein Verfahren zur Einrichtung sowie ein Anschlussgerät und ein System zur Einrichtung und zum Betrieb einer Kommunikationsverbindung mit einem Steuergerät gemäss dem Oberbegriff der Patentansprüche 1, 6 und 9.

### Stand der Technik

Geräte wie Generatoren, Motoren oder Transformatoren in elektrischen Übertragungsnetzen, welche eine eigentliche Aufgabe einer Anlage erfüllen, werden Primärgeräte genannt. Solche Primärgeräte sind mit eigenen Sekundär- oder Steuergeräten ausgerüstet, welche das Primärgerät regeln, steuern und überwachen. Dazu weisen die Steuergeräte Signalverbindungen zu übergeordneten Geräten auf, über welche Echtzeitdaten des Primärgerätes übermittelt werden. Steuergeräte weisen weiter auch Kommunikationsschnittstellen auf, an welche bei Bedarf ein Servicerechner angeschlossen werden kann, und über welche servicerelevante Statusdaten und Messdaten übermittelt werden. Diese Kommunikationsschnittstellen basieren beispielsweise auf einer RS232-Schnittstelle und verwenden herstellerspezifische Kommunikationsprotokolle, die nicht einem standardisierten Protokoll entsprechen. Die Kommunikationsschnittstellen dienen dazu, dass bei einer Störung oder einer Wartung des Primärgerätes ein Servicerechner an das Steuergerät angeschlossen werden kann. Mittels des Servicerechners lassen sich dann gespeicherte Daten des Steuergerätes auslesen, um beispielsweise eine Ursache einer Störung zu bestimmen oder um einen Zustand des Primärgerätes zu analysieren.

Im Rahmen moderner Konzepte zur Anlagenbewirtschaftung und Betriebsmitteloptimierung entsteht das Bedürfnis, Primärgeräte betreffende aktuelle Informationen dauernd zur Verfügung zu haben. Dazu werden die entsprechenden Steuergeräte über die bestehende Kommunikationsschnittstelle mit einem Kommunikationsnetzwerk verbunden. Es werden deshalb Anschlussgeräte benötigt, welche einerseits Treiber zum Ansprechen der Kommunikationsschnittstelle des Steuergerätes, sowie andererseits Treiber zum Ansprechen des Kommunikationsnetzwerkes aufweisen. Aufgrund von technischen Unterlagen einer Anlage muss dabei bestimmt werden, welche Treiber zum Ansprechen der Kommunikationsschnittstelle benötigt werden, und es müssen entsprechende Treiber beschafft und installiert werden. Die Treiber sind typischerweise herstellerspezifisch, also abhängig von einem Hersteller des Steuergeräts. Dadurch entsprechen die Treiber meistens nicht einem Standard. Die beschriebene Weise der Erstellung einer Kommunikationsverbindung ist somit aufwendig und verteuert eine Nachrüstung einer bestehenden Anlage im Hinblick auf eine Anlagenbewirtschaftung.

Es bestehen Methoden und Konzepte zum vereinfachten Anschluss von Rechnern an ein Computernetzwerk und zur automatischen Konfiguration dieser Rechner. Solche Konzepte sind unter dem Namen "plug and play" bekannt. Sie gehen jedoch davon aus, dass ein Rechner und ein Netzwerk bereits auf einen solchen Anschluss vorbereitet sind, was bei bereits installierten Steuergeräten jedoch nicht der Fall ist.

WO 98/50861 beschreibt, wie geeignete Gerätetreiber aus dem Netzkenntergeladen werden können.

### Darstellung der Erfindung

Es ist deshalb Aufgabe der Erfindung, ein Verfahren zur Einrichtung sowie ein Anschlussgerät und ein System zur Einrichtung und zum Betrieb einer Kommunikationsverbindung mit einem Steuergerät der eingangs genannten Art zu schaffen, welche die oben genannten Nachteile beheben.

Diese Aufgabe lösen ein Verfahren zur Einrichtung sowie ein Anschlussgerät und ein System zur Einrichtung und zum Betrieb einer Kommunikationsverbindung mit einem Steuergerät mit den Merkmalen der Patentansprüche 1, 6 und 9.

Im erfindungsgemässen Verfahren zur Einrichtung und zum Betrieb einer Kommunikationsverbindung mit einem Steuergerät
- empfängt ein Anschlussgerät über eine erste Kommunikationsschnittstelle eine Folge von Informationseinheiten oder einen Bitstrom vom Steuergerät ,
- wird anhand des Bitstroms automatisch bestimmt, ob mindestens ein Treiberprogramm respektive Treiber aus einer Menge von Treibern geeignet ist, die Kommunikation zum Steuergerät über die erste Kommunikationsschnittstelle zu bewerkstelligen,
- wird ein Treiber ausgewählt und dem Anschlussgerät übermittelt, und
- wird der Treiber im Anschlussgerät installiert, so dass eine Kommunikation mit dem Steuergerät mittels des Treibers erfolgen kann.

Dadurch wird es möglich, eine erste Kommunikationsschnittstelle mit einem Steuergerät automatisch einzurichten und zu betreiben, ohne dass ein manueller Aufwand, beispielsweise zur Bestimmung und Installation einer brauchbaren Treiberversion, vonnöten ist. Dies ist von Vorteil, wenn die erste Kommunikationsschnittstelle ein herstellerspezifisches und/oder nicht standardisiertes Kommunikationsprotokoll aufweist.

In einer bevorzugten Variante der Erfindung übermittelt das Anschlussgerät den Bitstrom über ein Kommunikationsnetzwerk an einen räumlich entfernten zentralen Treiberserver, welcher den geeigneten Treiber bestimmt. Dies hat den Vorteil, dass nicht ganze Bibliotheken mit Treibersoftware für eine Installation eines Anschlussgeräts mitgeführt werden müssen. Ein weiterer Vorteil ist, dass die Treiber sowie die Software zur Bestimmung geeigneter Treiber zentral zur Verfügung gestellt werden: Durch den zentralen Treiberserver werden sie einer Vielzahl von geographisch beliebig gelegenen Anlagen zugänglich gemacht.

In einer weiteren bevorzugten Variante der Erfindung ist der zentrale Treiberserver mit mindestens einem herstellerspezifischen Treiberserver verbunden, welcher den geeigneten Treiber bestimmt und übermittelt. Dies hat den Vorteil, dass Hersteller ihre Treibersoftware selber warten und zur Verfügung stellen können.

Vorzugsweise dient die Erfindung dazu, das Steuergerät an ein Kommunikationsnetzwerk anzuschliessen, insbesondere an ein auf einem Internet-Protokoll (IP) beruhendes Netzwerk.

Vorzugsweise ist das erfindungsgemäss angeschlossene Steuergerät ein Steuergerät eines primären Gerätes einer Anlage zur Erzeugung, Übertragung und Verteilung von Energie, oder einer industriellen oder verfahrenstechnischen Produktionsanlage.

Vorzugsweise dient die erfindungsgemäss ermöglichte Kommunikation mit dem Steuergerät einer Anlagenbewirtschaftung, Betriebsmitteloptimierung oder einer vorsorglichen Wartung.

Weitere bevorzugte Ausführungsformen gehen aus den abhängigen Patentansprüchen hervor.

### Kurze Beschreibung der Zeichnungen

Im folgenden wird die Erfindung anhand bevorzugter Ausführungsbeispiele, welche in den beiliegenden Zeichnungen dargestellt sind, näher erläutert. Es zeigen:
- Figur 1: eine schematische Darstellung einer Struktur eines erfindungsgemässen Systems;
- Figur 2: eine schematische Darstellung eines Ablaufs eines erfindungsgemässen Verfahrens in einer Einrichtungsphase;
- Figuren 3 und 4: schematische Darstellungen von Softwarestrukturen eines erfindungsgemässen Anschlussgerätes;
- Figur 5: eine schematische Darstellung einer Struktur des erfindungsgemässen Verfahrens in einer Betriebsphase; und
- Figur 6: eine schematische Darstellung eines Ablaufs des erfindungsgemässen Verfahrens in einer Betriebsphase.

Die in den Zeichnungen verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen.

### Wege zur Ausführung der Erfindung

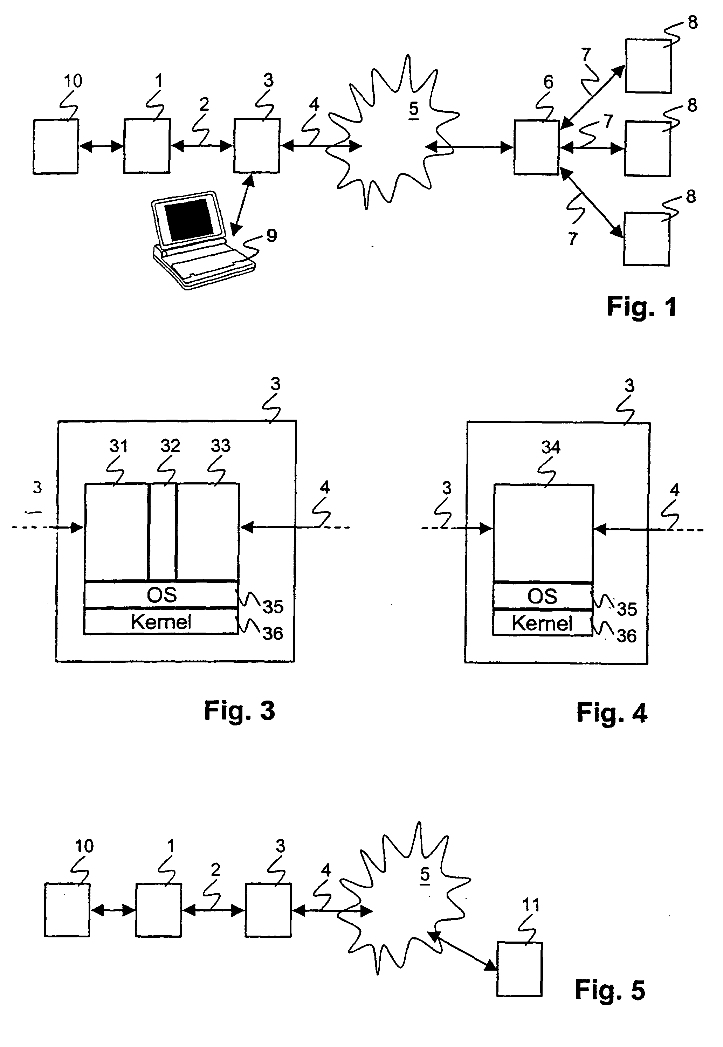

Figur 1 zeigt schematisch eine Struktur eines erfindungsgemässen Systems: Ein Steuergerät 1 ist über eine erste Kommunikationsschnittstelle 2 mit einem Anschlussgerät 3 verbunden. Das Anschlussgerät 3 ist über eine zweite kommunikationsschnittstelle 4 und ein Kommunikationsnetzwerk 5 mit einem zentralen Treiberserver 6 verbunden. Der zentrale Treiberserver 6 ist uber mindestens eine dritte Kommunikationsschnittstelle 7 mit mindestens einem herstellerspezifischen Treiberserver 8 verbunden. Ein Bedienungsrechner 9 ist in einer Einrichtungsphase mit dem Anschlussgerät 3 verbunden.

Das Steuergerät 1 ist ein Leittechnik- oder Sekundärgerät, dient also der Steuerung, der Regelung und dem Schutz eines Primärgerätes. Primärgeräte sind Gerate, welche eine eigentliche Funktion einer Anlage ausüben, beispielsweise Transformatoren, Generatoren, Motoren, Schalter, Freileitungen, Turbinen, Pumpen etc.

Die erste Kommunikationsschnittstelle 2 ist beispielsweise eine bekannte RS-232 oder eine RS-485-Schnittstelle. Hardwarebezogene Kommunikationsparameter einer physikalischen Kommunikationsschicht wie eine Parität, Anzahl Stopbits, etc. werden beispielsweise durch Permutation der Kommunikationsparameter ermittelt. Dazu weist das Anschlussgerät 3 bevorzugt ein Programmelement auf, welches die Kommunikationsparameter variiert und Daten an das Steuergerät 1 sendet, bis es Antwortdaten des Steuergerätes 1 empfängt. In Abhängigkeit einer Programmierung des Steuergerätes 1 ist eine manuelle Anregung des Steuergerätes 1 erforderlich, um das Steuergerät 1 zum Senden von Daten zu veranlassen. In diesem Fall gibt das Anschlussgerät 3 vorteilhafterweise über den Bedienungsrechner 9 eine entsprechende Anweisung an einen Bediener.

Der Bedienungsrechner 9 ist vorzugsweise ein portabler Computer, welcher keine anlage- oder gerätespezifischen Informationen aufweist, sondern nur eine generische Benutzerschnittstelle. Eine solche Benutzerschnittstelle wird beispielsweise durch einen Web-Browser gebildet. Zur Ansteuerung der Benutzerschnittstelle übermittelt das Anschlussgerät 3 dem Bedienungsrechner 9 Informationen in bekannter Weise als HTML (Hypertext Markup Language), XML (Extended Markup Language) oder Java-Code.

Figur 2 zeigt schematisch einen Ablauf eines erfindungsgemässen Verfahrens in der erfindungsgemässen Einrichtungsphase. Figur 2 zeigt als oberste Elemente die miteinander kommunizierenden Geräte, also das Steuergerät 1, das Anschlussgerät 3, den zentralen Treiberserver 6 und beispielhaft drei herstellerspezifische Treiberserver 8. Jedem Gerät ist in der Darstellung eine gestrichelt angedeutete vertikale Kolonne zugeordnet. Aktivitäten von Gerätes (101, 104, 106, 107 etc...) sind jeweils in der Kolonne des entsprechenden Gerätes 1,3,6,8 eingetragen.

Vor dem Ablauf gemäss Figur 2 wird das Anschlussgerät 3 von Hand an das Steuergerät 1 angeschlossen, so dass eine physische Grundlage für die erste Kommunikationsschnittstelle 2 vorhanden ist. Die zweite Kommunikationsschnittstelle 4 wird von Hand mit dem Kommunikationsnetzwerk 5 verbunden. Ein benötigtes Kommunikationsprotokoll zur Kommunikation mit dem Steuergerät 1 ist jedoch noch nicht bekannt. Ein solches Kommunikationsprotokoll beschreibt beispielsweise, was für Befehle und Daten übermittelbar sind, und welche Codierungen und Datenformate sie aufweisen. Dazu wird ein Treiberprogramm benötigt, welches allgemeine Befehle entsprechend dem verwendeten Kommunikationsprotokoll umsetzt und dem Steuergerät 1 übergibt.

Um ein solches Treiberprogramm zu bestimmen und damit eine Kommunikationsverbindung über die erste Kommunikationsschnittstelle 2 einzurichten, läuft das erfindungsgemässe Verfahren wie folgt ab: Eine Anregungsfunktion 101 des Anschlussgerätes 3 erzeugt auf der ersten Kommunikationsschnittstelle 2 ein Anregungssignal 102. Sobald das Steuergerät 1 ein geeignetes Anregungssignal 102 empfangen hat, sendet es eine Antwort, welche vom Anschlussgerät 3 als Folge von Informationseineiten oder als Bitstrom 103 empfangen wird. In einer Variante der Erfindung weist das Anschlussgerät 3 einen Benutzer an, eine manuelle Eingabe am Steuergerät 1 vorzunehmen, um das Steuergerät 1 zum Senden von Daten zu veranlassen. Das Anschlussgerät 3 codiert in einer ersten Umsetzung 104 den Bitstrom 103 derart, dass diese codierte Form des Bitstroms 103 über die zweite Kommunikationsschnittstelle 4 und das Kommunikationsnetzwerk 5 übertragbar sind. Diese codierte Form des Bitstroms 103 wird im Folgenden Information 105 des Bitstroms genannt. Die Information 105 des Bitstroms wird an den zentralen Treiberserver 6 übermittelt.

Der zentrale Treiberserver 6 führt eine Verteilung 106 der Information 105 des Bitstroms an den mindestens einen herstellerspezifischen Treiberserver 8 durch. Dieser herstellerspezifische resp. diese herstellerspezifischen Treiberserver 8 führen eine Analyse 107 des Bitstroms, auch bekannt als "sniffing", durch. Diese Analyse 107 hat zum Ziel, eine Identität des Steuergerätes 1 und einen geeigtenen Treiber zu bestimmen. Entsprechend von Resultaten der Analyse 107 erhält der zentrale Treiberserver 6 mindestens eine Rückmeldung 108, ob mindestens ein geeigneter Treiber gefunden wurde. Entsprechend dieser Rückmeldungen 108 wählt (109) der zentrale Treiberserver 6 einen von den mindestes einen geeigneten Treibern aus. Darauf führt der zentrale Treiberserver 6 einen Abruf 110 eines entsprecheden Treiberprogramms 111 beim entsprechenden herstellerspezifischen Treiberserver 8 durch. Das Treiberprogramm 111 wird dem Anschlussgerät übermittelt und dort eingerichtet 112 oder installiert, so dass es ausführbar ist.

Es kann geschehen, dass anhand der Information 105 des Bitstroms in der oben beschriebenen Weise noch keine eindeutige Auswahl eines geeigneten Treibers möglich ist. In diesem Falle wird die Identität des Steuergerätes 1 anhand von einer weiteren Interaktion zwischen Anschlussgerät 3 und Steuergerät 1 ermittelt. Dazu wird für jeden potentiell geeigneten Treiber eine Interaktion mit dem Steuergerät 1 durchgeführt, bei welcher Anregungssignale oder Befehle des Anschlussgerätes 3 mit Antworten des Steuergerätes 1 abwechseln. Wenn Antworten des Steuergerätes 1 nicht erwarteten Antworten entsprechen, ist der entsprechende Treiber nicht geeignet. Jede Antwort des Steuergerätes 1 entspricht einem Einzelbitstrom. Die Folge aller Einzelbitströme ist damit der Bitstrom 103, welcher zusammen mit der Information über die aufeinanderfolgenden Befehle des Anschlussgerätes 3 zur Bestimmung des geeigneten Treibers dient. Informationen über die erwartete Interaktion respektive über das Kommunikationsverhalten eines Steuergerätes 1 sind in den herstellerspezifischen Treiberservern 8 als Teil von Daten, welche zur Analyse 107 gehören, gespeichert. Die Interaktion wird entweder Schritt für Schritt von einem herstellerspezifischen Treiberserver 8 aus gesteuert, oder die Interaktionsinformationen werden dem Anschlussgerät 3 übermittelt und dort mit der tatsächlich ablaufenden Interaktion verglichen.

Eine Variante der Erfindung weist keine herstellerspezifische Treiberserver 8 auf, so dass die Analyse 107 auf dem zentralen Treiberserver 6 ausgeführt wird.

In einer weiteren Variante der Erfindung wird die Suche des geeigneten Treibers anhand von bereits vorhandenen Informationen eingeschränkt. Dabei gibt beispielsweise der Bediener Informationen über einen Hersteller, einen Gerätetyp, eine Serienummer oder eine Hard- oder Softwareversionsnummer des Steuergerätes 1 ein. Anhand dieser Informationen wird die erfindungsgemässe Suche nach Treibern eingeschränkt und vereinfacht.

Figuren 3 und 4 zeigen schematisch Softwarestrukturen eines erfindungsgemässen Anschlussgerätes in einer Betriebsphase, also nach dem Einrichten der Kommunikationsverbindung über die erste Kommunikationsschnittstelle 2. Eine erste Variante gemäss Figur 3 zeigt einen ersten Schnittstellentreiber 31, der über eine universelle Programmschnittstelle 32 mit einem Netzwerktreiber 33 kommuniziert. Eine zweite Variante gemäss Figur 4 zeigt einen zweiten Schnittstellentreiber 34, welcher die Kommunikation über die erste wie auch die zweite Kommunikationsschnittstelle 2,4 bewerkstelligt. In beiden Varianten entspricht der jeweilige Schnittstellentreiber 31,34 dem erfindungsgemäss bestimmten, übermittelten und installierten Treiberprogramm 111. In einer vorteilhaften Ausführungsform der Erfindung basieren die Schnittstellentreiber auf einem Java-Betriebssystem 35 mit beispielsweise einem Linux-Kernel 36. Dies hat den Vorteil, dass dafür keine Lizenzgebühren zu entrichten sind.

In der ersten Variante gemäss Figur 3 wird nur der erste Schnittstellentreiber 31 gemäss dem erfindungsgemässen Verfahren bestimmt und installiert, währenddem der Netzwerktreiber bereits im voraus im Anschlussgerät 3 gespeichert und/oder installiert ist. Die erste Variante bietet den Vorteil, dass nur ein Teil der Software des Anschlussgerätes 3 übertragen werden muss, und dass nur gerätespezifische Varianten des ersten Schnittstellentreibers 31 erstellt werden müssen.

In der zweiten Variante gemäss Figur 4 wird der zweite Schnittstellentreiber 34 gemäss dem erfindungsgemässen Verfahren bestimmt und installiert. Die zweite Variante bietet gegenüber der ersten Variante gemäss Figur 3 den Vorteil, dass der zweite Schnittstellentreiber 34 effizienter ausführbar ist, da keine interne Programmschnittstelle 32 erforderlich ist.

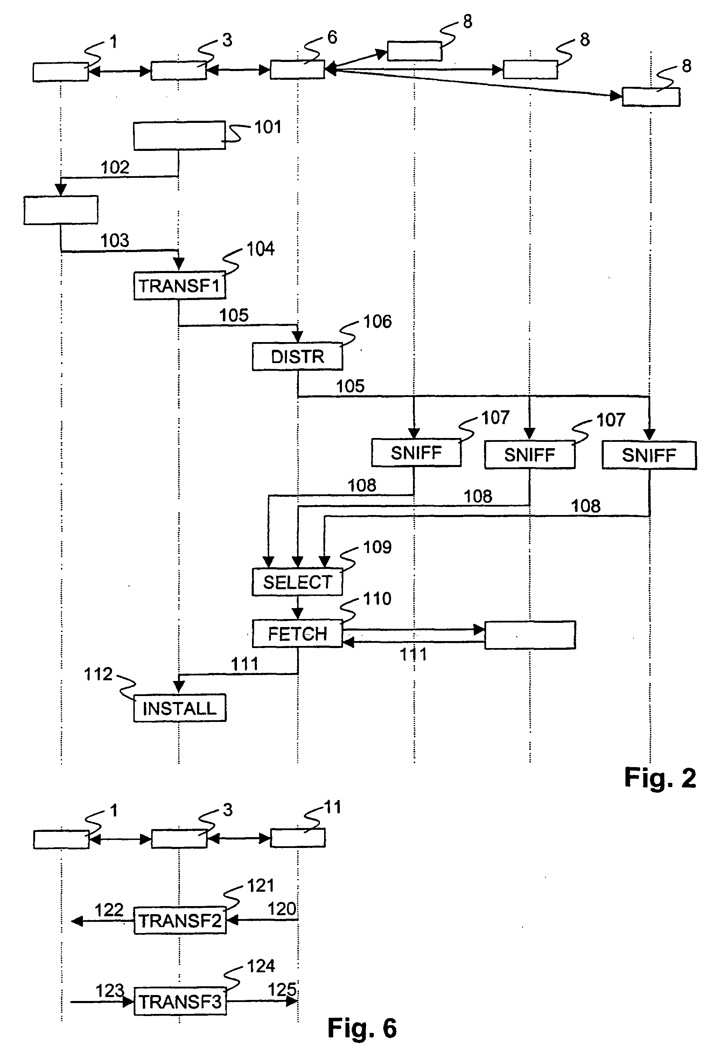

Figur 5 zeigt schematisch eine Struktur des erfindungsgemässen Systems in der Betriebsphase: Die Struktur weist ein übergeordnetes Leittechnikgerät 11 auf, welches vorzugsweise über das Kommunikationsnetzwerk 5 und das Anschlussgerät 3 mit dem Steuergerät 1 kommuniziert.

Figur 6 zeigt schematisch einen Ablauf des erfindungsgemässen Verfahrens in der Betriebsphase. Dabei ist die Figur 6 analog zu Figur 2 aufgebaut. Das übergeordnete Leittechnikgerät 11 sendet dem Anschlussgerät 3 Befehle 120. Das Anschlussgerät 3 führt eine zweite Umsetzung 121 der Befehle durch, und übermittelt die Befehle dem Steuergerät 1 als umgesetzte Befehle 122 gemäss dem Kommunikationsprotokoll der ersten Kommunikationsschnittstelle 2. Rückmeldungen 123 des Steuergeräts 1 über die erste Kommunikationsschnittstelle 2 werden durch eine dritte Umsetzung 124 der zweiten Kommunikationsschnittstelle 4 angepasst und als umgesetzte Rückmeldungen 125 dem übergeordneten Leittechnikgerät 11 übermittelt.

In einer bevorzugten Variante der Erfindung basieren die zweite Kommunikationsschnittstelle 4 und das Kommunikationsnetzwerk 5 auf dem Internet-Protokoll (IP). Vorzugsweise wird dabei dem Anschlussgerät 3 eine IP-Adresse des zentralen Treiberservers 6 einprogrammiert oder eingegeben. Nach einem hardwaremässigen Anschliessen der ersten und zweiten Kommunikationsschnittstelle 2,4 des Anschlussgerätes 3 nimmt das Anschlussgerät 3 automatisch mittels dieser IP-Adresse eine Verbindung zum zentralen Treiberserver 6 auf. Somit sind ausser dem hardwaremässigen Anschliessen keine weiteren wesentlichen manuellen Aktionen oder Eingaben erforderlich.

Vorteilhafterweise wird bei einer Kommunikation über das Internet ein bekanntes SSL (Secure Socket Layer) Kommunikationsverfahren verwendet, um Störungen durch Dritte zu verhindern und um Vertraulichkeit von Daten zu sichern. Zur Vermeidung einer Einflussnahme durch nichtberechtigte Dritte werden vorzugsweise auch Überwachungs- und Steuerbefehle getrennt behandelt. Beispielsweise wird für eine Ausführung eines Steuerbefehls oder eines Softwareupdates eine manuelle Eingabe am Anschlussgerät 3 oder eine Verifikation einer Identität eines Absenders gefordert.

In einer weiteren bevorzugten Variante basieren auch die dritten Kommunikationsschnittstellen 7 auf dem Internet-Protokoll (IP).

In einer weiteren Variante der Erfindung wird anstelle des Kommunikationsnetzwerkes 5 eine beliebige andere Kommunikationsverbindung zum zentralen Treiberserver 6 eingesetzt.

Das übergeordnete Leittechnikgerät 11 dient vorzugsweise einer Anlagenbewirtschaftung, einer Betriebsmitteloptimierung oder einer Investitionsgüterüberwachung. Dabei werden Zustände von Primärgeräten dauernd überwacht. Aufgrund von gesammelten Daten wird ein vorbeugender Unterhalt oder Ersatz eines Primärgerätes durchgeführt, wenn sich beispielsweise ein sinkender Wirkungsgrad oder ein nahender Ausfall des Primärgerätes abzeichnet. Bei einem Ausfall eines Primärgerätes stehen Diagnosedaten bereits zur Verfügung, so dass eine effiziente Reparatur organisiert werden kann. Die derart überwachten Zustände entsprechen Daten mit einer relativ niedrigen Abtastrate im Bereich von beispielsweise Sekunden bis Minuten oder Stunden. Dies steht im Gegensatz zu Echtzeitdaten aus der Steuerung oder Regelung des Primärgerätes 6, welche Abtastraten im Bereich von beispielsweise Sekunden bis Millisekunden oder Mikrosekunden aufweisen.

Das übergeordnete Leittechnikgerät 11 dient vorzugsweise auch einer Änderung von Parametern und/oder einer Aufdatierung von Programmen des Steuergerätes 1.

In einer vorteilhaften Variante der Erfindung betrifft sie elektrische Schaltanlagen zur Transformation und Verteilung von Hoch- Mittel- und Niederspannungsenergie. Die Kommunikation basiert vorteilhafterweise auf XML und/oder einem SCL (Substation Communication Language) Sprachstandard der IEC-Norm 61850 respektive ihres Entwurfs. Der Standard definiert Gerätefunktionen und Datentypen für Steuergeräte von Schaltanlagen.

Die Erfindung bietet den Vorteil, dass ein universell verwendbares Anschlussgerät 3, evtl. mit Varianten entsprechend verschiedenen Hardwareschnittstellen, an ein bestehendes Steuergerät 1 mit unbekanntem Schnittstellenprotokoll, sowie an ein Kommunikationsnetzwerk 5 angeschlossen werden kann, und dass das Anschlussgerät 3 darauf automatisch die Kommunikation zum Steuergerät T aufbaut und anschliessend betreibt.

### Bezugszeichenliste

- 1: Steuergerät
- 2: erste Kommunikationsschnittstelle
- 3: Anschlussgerät
- 4: zweite Kommunikationsschnittstelle
- 5: Kommunikationsnetzwerk
- 6: zentraler Treiberserver
- 7: dritte Kommunikationsschnittstelle
- 8: herstellerspezifischer Treiberserver
- 9: Bedienungsrechner
- 10: Primärgerät
- 11: übergeordnetes Leittechnikgerät
- 31: erster Schnittstellentreiber
- 32: Programmschnittstelle
- 33: Netzwerktreiber
- 34: zweiter Schnittstellentreiber
- 35: Java-Betriebssystem
- 36: Linux-Kernel
- 101: Anregungsfunktion
- 102: Anregungssignal
- 103: Bitstrom
- 104: erste Umsetzung TRANSF1
- 105: Information des Bitstroms
- 106: Verteilung DISTR
- 107: Analyse SNIFF
- 108: Rückmeldung
- 109: Auswahl SELECT
- 110: Abruf FETCH
- 111: Treiberprogramm
- 112: Einrichtung INSTALL
- 120: Befehle
- 121: zweite Umsetzung TRANSF2
- 122: umgesetzte Befehle
- 123: Rückmeldungen
- 124: dritte Umsetzung TRANSF3
- 125: umgesetzte Rückmeldungen

## Patentansprüche

1. Verfahren zum Einrichten einer Kommunikationsverbindung zu einem Steuergerät (1) mittels eines Anschlussgerätes (3), **dadurch gekennzeichnet,**
**dass** das Anschlussgerät (3) über eine erste Kommunikationsschnittstelle (2) einen Bitstrom (103) vom Steuergerät (1) empfängt,
**dass** anhand des Bitstroms (103) bestimmt wird, ob mindestens ein geeigneter Treiber (31,34,111) aus einer Menge von Treibern geeignet ist, die Kommunikation zum Steuergerät (1) über die erste Kommunikationsschnittstelle (2) zu bewerkstelligen,
**dass** einer der mindestens einen geeigneten Treiber (31,34,111) ausgewählt und dem Anschlussgerät (3) übermittelt wird, und
**dass** der Treiber (31,34,111) im Anschlussgerät (3) installiert wird.

2. Verfahren gemäss Anspruch 1, **dadurch gekennzeichnet,**
**dass** eine Information (105) des Bitstroms über eine zweite Kommunikationsschnittstelle (4) an einen zentralen Treiberserver (6) übermittelt wird, und
**dass** der zentrale Treiberserver (6) anhand der Information (105) des Bitstroms den mindestens einen geeigneten Treiber (31,34,111) bestimmt.

3. Verfahren gemäss Anspruch 1, **dadurch gekennzeichnet,**
**dass** eine Information (105) des Bitstroms über eine zweite Kommunikationsschnittstelle (4) an einen zentralen Treiberserver (6) übermittelt wird,
**dass** der zentrale Treiberserver (6) die Information (105) des Bitstroms mindestens einem herstellerspezifischen Treiberserver (8) übermittelt, und
**dass** jeder der mindestens einen herstellerspezifischen Treiberserver (8) anhand der Information (105) des Bitstroms bestimmt, ob ein herstellerspezifischer Treiber ein geeigneter Treiber (31,34,111) ist.

4. Verfahren gemäss Anspruch 1, **dadurch gekennzeichnet, dass** der Bitstrom (103) aus einer Folge von mehreren Einzelbitströmen besteht, wobei das Steuergerät (1) jeweils einen Einzelbitstrom als Antwort auf einen von mehreren aufeinanderfolgenden Befehlen des Anschlussgerätes (3) sendet.

5. Verfahren gemäss Anspruch 2, **dadurch gekennzeichnet, dass** Daten, welche über die zweite Kommunikationsschnittstelle (4) übermittelt werden, entsprechend einem Internet Protokoll (IP) übermittelt werden.

6. Anschlussgerät (3) zur Einrichtung und zum Betrieb einer Kommunikationsverbindung mit einem Steuergerät (1), **dadurch gekennzeichnet, dass** das Anschlussgerät (3)
Mittel zum Empfangen und Speichern eines Bitstroms (103) durch eine erste Kommunikationsschnittstelle (2),
Mittel zur Umsetzung des Bitstroms (103) und zur Übermittlung einer Information (105) des Bitstroms über eine zweite Kommunikationsschnittstelle (4),
Mittel zum Empfang eines Treiberprogramms (31,34,111) über die zweite Kommunikationsschnittstelle (4), wobei das Treiberprogramm (31,34,111) geeignet ist, eine Kommunikation zum Steuergerät (1) über die erste Kommunikationsschnittstelle (2) zu bewerkstelligen, und
Mittel zur Installation und Ausführung des Treiberprogramms (31,34,111) zur Kommunikation über die erste Kommunikationsschnittstelle (2) aufweist.

7. Anschlussgerät (3) gemäss Anspruch 6, **dadurch gekennzeichnet, dass** die zweite Kommunikationsschnittstelle (4) auf einem Internet Protokoll (IP) beruht.

8. Anschlussgerät (3) gemäss Anspruch 6, **dadurch gekennzeichnet, dass** das Anschlussgerät (3) Mittel zur Installation und Ausführung des Treiberprogramms (31,34,111) zur bidirektionalen Übermittlung von Daten zwischen der ersten Kommunikationsschnittstelle (2) und der zweiten Kommunikationsschnittstelle (4) aufweist.

9. System zum Einrichten einer Kommunikationsverbindung zu einem Steuergerät (1) mittels eines Anschlussgerätes (3), **dadurch gekennzeichnet, dass** das Anschlussgerät (3)
Mittel zum Empfangen und Speichern eines Bitstroms (103) durch eine erste Kommunikationsschnittstelle (2),
Mittel zur Umsetzung des Bitstroms (103) und zur Übermittlung einer Information (105) des Bitstroms über eine zweite Kommunikationsschnittstelle (4),
Mittel zum Empfang eines Treiberprogramms (31,34,111) über die zweite Kommunikationsschnittstelle (4), wobei das Treiberprogramm (31,34,111) geeignet ist, eine Kommunikation zum Steuergerät (1) über die erste Kommunikationsschnittstelle (2) zu bewerkstelligen, und
Mittel zur Installation und Ausführung des Treiberprogramms (31,34, 111) zur Kommunikation über die erste Kommunikationsschnittstelle (2) aufweist,
und dass das System einen zentralen Treiberserver (6) zur Bestimmung von Treiberprogrammen (31,34,111), mit welchen eine Kommunikation des Anschlussgerätes (3) mit dem Steuergerät (1) realisierbar ist, aufweist.

10. System gemäss Anspruch 9, **dadurch gekennzeichnet, dass** das System herstellerspezifische Treiberserver (8) zur Bestimmung von Treiberprogrammen (31,34,111), mit welchen eine Kommunikation des Anschlussgerätes (3) mit dem Steuergerät (1) realisierbar ist, aufweist.

## Claims

1. Method for installation of a communications link for a controller (1) by means of a connecting appliance (3), **characterized**
**in that** the connecting appliance (3) receives a bit stream (103) from the controller (1) via a first communications interface (2),
**in that** the bit stream (103) is used to determine whether at least one suitable driver (31, 34, 111) from a set of drivers is suitable to provide the communication to the controller (1) via the first communications interface (2),
**in that** one of the at least one suitable drivers (31, 34, 111) is selected and is transmitted to the connecting appliance (3) and
**in that** the driver (31, 34, 111) is installed in the connecting appliance (3).

2. Method according to Claim 1, **characterized**
**in that** information (105) in the bit stream is transmitted to a central driver server (6) via a second communications interface (4) and
**in that** the central driver server (6) uses the information (105) in the bit stream to determine the at least one suitable driver (31, 34, 111).

3. Method according to Claim 1, **characterized**
**in that** information (105) in the bit stream is transmitted to a central driver server (6) via a second communications interface (4),
**in that** the central driver server (6) transmits the information (105) in the bit stream to at least one manufacturer-specific driver server (8), and
**in that** each of the at least one manufacturer-specific driver servers (8) uses the information (105) in the bit stream to determine whether a manufacturer-specific driver is a suitable driver (31, 34, 111).

4. Method according to Claim 1, **characterized in that** the bit stream (103) comprises a sequence of a plurality of individual bit streams, the controller (1) sending at least one individual bit stream as a response to one of a number of successive commands from the connecting appliance (3).

5. Method according to Claim 2, **characterized in that** data which are transmitted via the second communications interface (4) are transmitted in accordance with an Internet Protocol (IP).

6. Connecting appliance (3) for installation and for operation of a communications link to a controller (1), **characterized in that** the connecting appliance (3) has
means for receiving and storing a bit stream (103) through a first communications interface (2),
means for converting the bit stream (103) and for transmitting information (105) in the bit stream via a second communications interface (4),
means for receiving a driver program (31, 34, 111) via the second communications interface (4), wherein the driver program (31, 34, 111) is suitable to provide communication to the controller (1) via the first communications interface (2), and
means for installation and execution of the driver program (31, 34, 111) for communication via the first communications interface (2).

7. Connecting appliance (3) according to Claim 6, **characterized in that** the second communications interface (4) is based on an Internet Protocol (IP).

8. Connecting appliance (3) according to Claim 6, **characterized in that** the connecting appliance (3) has means for installation and execution of the driver program (31, 34, 111) for transmitting data in both directions between the first communications interface (2) and the second communications interface (4).

9. System for installation of a communications link for a controller (1) by means of a connecting appliance (2), **characterized in that** the connecting appliance (3) has
means for receiving and storing a bit stream (103) through a first communications interface (2),
means for converting the bit stream (103) and for transmitting information (105) in the bit stream via a second communications interface (4),
means for receiving a driver program (31, 34, 111) via the second communications interface (4),
wherein the driver program (31, 34, 111) is suitable to provide communication to the controller (1) via the first communications interface (2), and
means for installation and execution of the driver program (31, 34, 111) for communication via the first communications interface (2),
and **in that** the system has a central driver server (6) for determining driver programs (31, 34, 111) by means of which communication can be provided from the connecting appliance (3) to the controller (1).

10. System according to Claim 9, **characterized in that** the system has manufacturer-specific driver servers (8) for defining driver programs (31, 34, 111) by means of which the connecting appliance (3) can communicate with the controller (1).

## Revendications

1. Procédé pour établir une liaison de communication vers un appareil de commande (1) au moyen d'un appareil de connexion (3), **caractérisé en ce que** l'appareil de connexion (3) reçoit un flux (103) de bits de l'appareil de commande (1) par l'intermédiaire d'une première interface de communication (2), **en ce que** l'on détermine sur base du flux (103) de bits si au moins un pilote (31, 34, 111) parmi une quantité de pilotes convient pour établir la communication avec l'appareil de commande (1) par l'intermédiaire de la première interface de communication (2), **en ce qu'**au moins un pilote approprié (31, 34, 111) est sélectionné parmi les pilotes qui sont au moins au nombre de un et est transmis à l'appareil de connexion (3) et **en ce que** le pilote (31, 34, 111) est installé dans l'appareil de connexion (3).

2. Procédé selon la revendication 1, **caractérisé en ce qu'**une information (105) du flux de bits est transmise à un serveur central (6) de pilotes par l'intermédiaire d'une deuxième interface de communication (4) et **en ce que** le serveur central (6) de pilotes détermine le au moins un pilote (31, 34, 111) approprié à l'aide de l'information (105) du flux de bits.

3. Procédé selon la revendication 1, **caractérisé en ce qu'**une information (105) du flux de bits est transmise à un serveur central (6) de pilotes par l'intermédiaire d'une deuxième interface de communication (4), **en ce que** le serveur central (6) de pilotes transmet l'information (105) du flux de bits à au moins un serveur (8) de pilote spécifique au fabricant et **en ce que** chacun parmi le ou les serveurs (8), de pilotes spécifiques aux fabricants détermine à l'aide de l'information (105) du flux de bits si un pilote spécifique au fabricant est un pilote (31, 34, 111) approprié.

4. Procédé selon la revendication 1, **caractérisé en ce que** le flux (103) de bits est constitué d'une suite de plusieurs flux individuels de bits, l'appareil de commande (1) envoyant chaque fois un flux individuel de bits en tant que réponse à un parmi plusieurs ordres successifs de l'appareil de connexion (3).

5. Procédé selon la revendication 2, **caractérisé en ce que** les données transmises par l'intermédiaire de la deuxième interface de communication (4) sont transmises selon un protocole internet (IP).

6. Appareil de connexion (3) destiné à établir et à gérer une liaison de communication avec un appareil de commande (1), **caractérisé en ce que** l'appareil de connexion (3) présente
des moyens de réception et de conservation en mémoire d'un flux (103) de bits par l'intermédiaire d'une première interface de communication (2),
des moyens de conversion du flux (103) de bits et de transmission d'une information (105) du flux de bits par l'intermédiaire d'une deuxième interface de communication (4),
des moyens de réception d'un programme de gestion (31, 34, 111) par l'intermédiaire de la deuxième interface de communication (4), le programme de gestion (31, 34, 111) convenant pour établir la communication avec l'appareil de commande (1) par l'intermédiaire de la première interface de communication (2) et
des moyens d'installation et d'exploitation du programme de pilote (31, 34, 111) pour la communication par l'intermédiaire de la première interface de communication (2).

7. Appareil de connexion (3) selon la revendication 6, **caractérisé en ce que** la deuxième interface de communication (4) repose sur un protocole internet (IP).

8. Appareil de connexion (3) selon la revendication 6, **caractérisé en ce que** l'appareil de connexion (3) présente des moyens d'installation et d'exécution du programme de pilote (31, 34, 111) pour la transmission bidirectionnelle de données entre la première interface de communication (2) et la deuxième interface de communication (4).

9. Système destiné à établir une liaison de communication avec un appareil de commande (1) au moyen d'un appareil de connexion (3), **caractérisé en ce que** l'appareil de connexion (3) présente
des moyens pour recevoir et conserver en mémoire un flux (103) de bits par l'intermédiaire d'une première interface de communication (2),
des moyens pour convertir le flux (103) de bits et pour transmettre une information (105) du flux de bits par l'intermédiaire d'une deuxième interface de communication (4),
des moyens pour recevoir un programme de pilote (31, 34, 111) par l'intermédiaire de la deuxième interface de communication (4), le programme de pilote (31, 34, 111) convenant pour établir la communication avec l'appareil de commande (1) par l'intermédiaire de la première interface de communication (2) et
des moyens pour installer et exécuter le programme de pilote (31, 34, 111) pour la communication par l'intermédiaire de la première interface de communication (2)
et **en ce que** le système présente un serveur central (6) de pilotes qui détermine les programmes de pilote (31, 34, 11) qui permettent à l'appareil de connexion (3) de communiquer avec l'appareil de commande (1).

10. Système selon la revendication 9, **caractérisé en ce que** le système présente des serveurs (8) de pilotes spécifiques aux fabricants qui servent à déterminer des programmes de pilote (31, 34, 111) qui permettent à l'appareil de connexion (3) de communiquer avec l'appareil de commande (1).
